# EUROPÄISCHE PATENTSCHRIFT

(11) **EP 1 336 039 B1**
(45) Veröffentlichungstag und Bekanntmachung des Hinweises auf die Patenterteilung: **21.06.2006**
(21) Anmeldenummer: 01993753.1
(22) Anmeldetag: 20.10.2001
(51) Int. Cl.: F02D 41/02, F02D 41/14, F01N 3/023, F01N 9/00

(54) **VERFAHREN UND VORRICHTUNG ZUR STEUERUNG EINES ABGASNACHBEHANDLUNGSSYSTEMS**
METHOD AND DEVICE FOR THE CONTROL OF AN EXHAUST TREATMENT SYSTEM
PROCEDE ET DISPOSITIF DE COMMANDE D'UN SYSTEME DE RETRAITEMENT DES GAZ D'ECHAPPEMENT

(30) Priorität: 11.11.2000 DE 10056035
(43) Veröffentlichungstag der Anmeldung: 20.08.2003
(73) Patentinhaber: ROBERT BOSCH GMBH, 70442 Stuttgart (DE)
(72) Erfinder: PLOTE, Holger, 70736 Fellbach-Oeffingen (DE)
(86) Internationale Anmeldenummer: PCT/DE2001/004004
(87) Internationale Veröffentlichungsnummer: WO 2002/038934

(56) Entgegenhaltungen:
- EP-A- 0 733 787
- DE-A- 19 746 855
- FR-A- 2 774 421
- US-A- 5 771 685

## Beschreibung

### Stand der Technik

Die Erfindung betrifft ein Verfahren und eine Vorrichtung zur Steuerung eines Partikelfilters insbesondere einer Brennkraftmaschine gemäß den Oberbegriffen der unabhängigen Ansprüche.

Ein Verfahren und eine Vorrichtung zur Steuerung eines Abgasnachbehandlungssystems einer Brennkraftmaschine sind aus der DE-A 199 06 287 bekannt. Dort beinhaltet das Abgasnachbehandlungssystem einen Partikelfilter, der insbesondere bei direkt einspritzenden Brennkraftmaschinen eingesetzt wird.

Bei solchen Partikelfiltern kommt es zu einer Beladung des Filters mit Partikeln. Bei Überschreiten einer kritischen Partikelmenge erfolgt eine Regeneration. Problematisch dabei ist das Erkennen des Beginns und des Endes der Regeneration sowie die Beurteilung, ob die Partikel vollständig regeneriert, das heißt oxidiert, wurden. Häufig wird der Differenzdruck über dem Partikelfilter als Ausgangsgröße zur Bestimmung der Beladung erfasst. Bei der Regeneration nimmt der Widerstand, welcher das Partikelfilter dem durchströmenden Medium entgegensetzt, ab, bis nach vollständiger Umsetzung der Partikel wieder der Wert für das leere Filter erreicht wird.

Problematisch ist die Einlagerung von Asche im Filter, die über die Betriebsdauer zu einem kontinuierlichen Anstieg des Differenzdrucks auch bei einem vollständig regenerierten Partikelfilter führt. Die abgelagerte Additivasche kann über den Kraftstoffverbrauch abgeschätzt werden und entsprechend berücksichtigt werden. Auftretende Ölasche infolge des Ölverbrauchs des Motors kann nicht ohne Weiteres erkannt werden. Dies führt dazu, dass bei einem vollständig regenerierten Partikelfilter ein erhöhter Strömungswiderstand und damit ein erhöhter Differenzdruck auftritt. Dies führt dazu, dass nachfolgende Regenerationen zu früh und/oder zu häufig ausgelöst werden.

In der EP-A-0 733 787 ist eine Abgasereinigungsanlage einer Brennkraftmaschine bekannt geworden, die einen NOx-Speicherkatalysator enthält. Der NOx-Speicherkatalysator wird zeitweise vom eingelagerte NOx im Rahmen einer Regeneration befreit. Zur Regeneration das zur Regeneration benötigte Reagenzmittel, im vorliegenden Fall Kohlenwasserstoffe, wird durch eine Beeinflussung des Verbrennungsvorgangs in der Brennkraftmaschine bereitgestellt. Der Verbrennungsvorgang wird mit einer Lambdaregelung geregelt, wobei das Lambda-Ist-Signal von einem stromaufwärts vor dem NOx-Speicherkatalysator angeordneten ersten Lambdasensor erfasst wird. Mittels eines stromabwärts nach dem NOx-Speicherkatalysator angeordneten zweiten Lambdasensors wird insbesondere das Regenerationsende des NOx-Katalysators anhand eines Fettdurchbruchs detektiert.

### Vorteile der Erfindung

Dadurch, dass eine erste Größe, welche die Sauerstoffkonzentration im Abgas vor dem Partikelfilter charakterisiert und eine zweite Größe, welche die Sauerstoffkonzentration im Abgas nach dem Partikelfilter charakterisiert, ausgewertet wird, und dass die Steuerung der Regeneration abhängig von diesen Größen erfolgt, ist eine wesentlich genauere Steuerung der Partikelfilter-Regeneration möglich.

Vorzugsweise werden zwei Sensoren zur Erfassung der Sauerstoffkonzentration zum einen vor und zum anderen nach dem Partikelfilter verwendet. Aufgrund des Oxidationsvorgangs der eingelagerten Partikel während der Regeneration tritt während der Regeneration hinter dem Partikelfilter eine geringere Sauerstoffkonzentration auf als vor dem Partikelfilter.

### (Fortsetzung mit der ursprünglich eingereichten Seite 3 der Beschreibungseinleitung)

Ist das Ende der Regeneration erreicht, so nehmen beide Größen nahezu den gleichen Wert an. Dies beruht darauf, dass keine Partikel mehr umgesetzt, d. h. oxidiert, werden, bzw. dass nur noch die Partikel umgesetzt werden, die gerade von der Brennkraftmaschine emittiert werden. Durch Auswerten dieser beiden Signale ist eine sehr einfache und genaue Erkennung des Endes der Regeneration möglich. Die Werte sind nahezu gleich, wenn die Differenz der beiden Werte einen solchen Wert annehmen, der der üblichen Meßgenauigkeit entspricht.

Besonders vorteilhaft ist es, wenn zusätzlich die Abgastemperatur dahingehend überprüft wird, ob sie einen bestimmten Schwellenwert überschreitet, da nur in diesem Fall eine Oxidation stattfindet. Nur in diesem Fall zeigt die gleiche Sauerstoffkonzentration vor und nach dem Filter eine Beendigung der Oxidation an.

Besonders vorteilhaft ist es, wenn ein Differenzdrucksignal, das einen leeren Filter kennzeichnet, beim erkannten Ende der Regeneration adaptiert wird. Dadurch ist auch eine wesentlich genauere Steuerung des Beginns der Regeneration möglich.

Weitere vorteilhafte und zweckmäßige Ausgestaltungen und. Weiterbildungen der Erfindung sind in den Unteransprüchen gekennzeichnet.

### Zeichnung

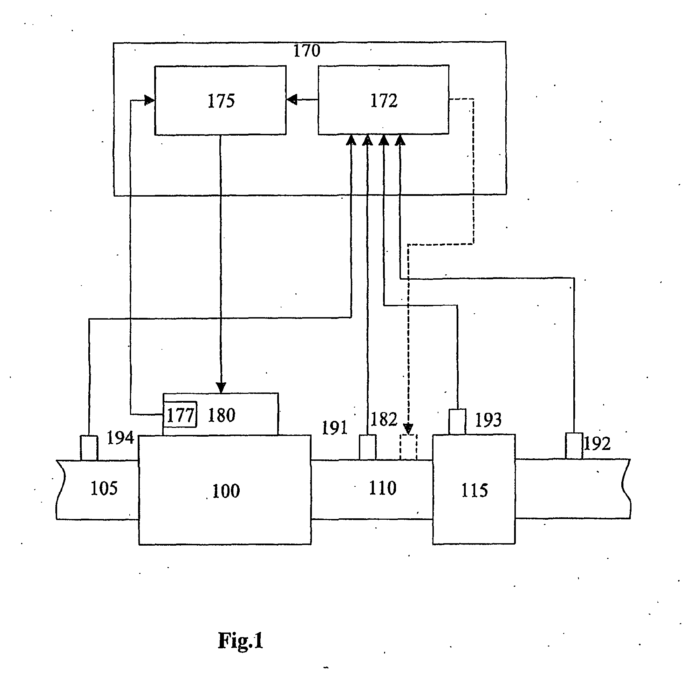

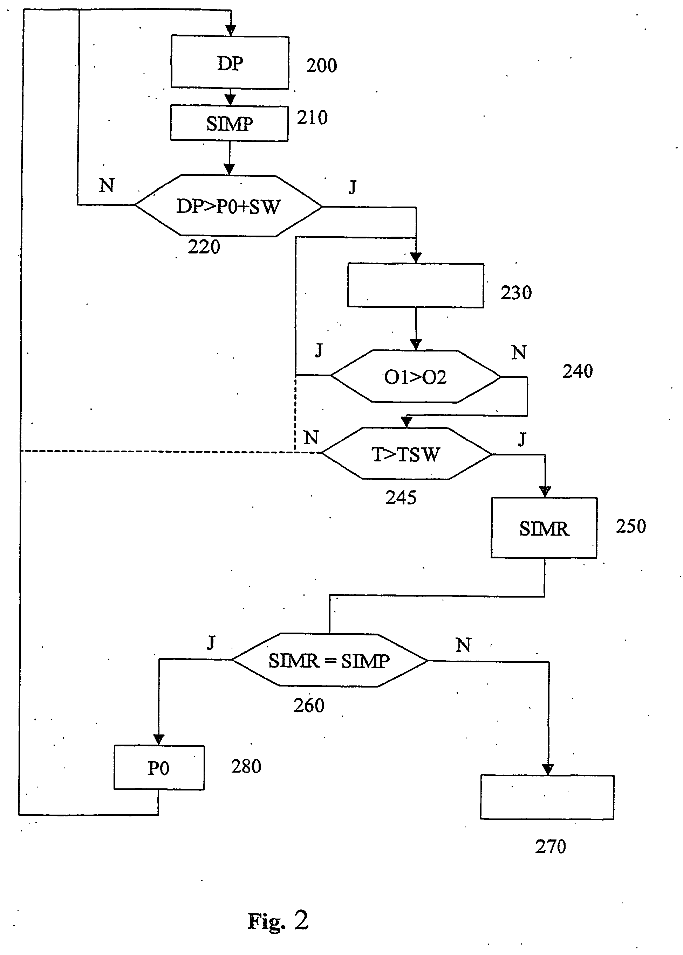

Die Erfindung wird nachstehend anhand der in der Zeichnung dargestellten Ausführungsformen erläutert. Es zeigen Figur 1 ein Blockdiagramm der erfindungsgemäßen Steuerung, Figur 2 ein Flussdiagramm der erfindungsgemäßen Vorgehensweise.

### Beschreibung der Ausführungsbeispiele

In Figur 1 sind die wesentlichen Elemente eines Abgasnachbehandlungssystems einer Brennkraftmaschine dargestellt. Die Brennkraftmaschine ist mit 100 bezeichnet. Ihr wird über eine Frischluftleitung 105 Frischluft zugeführt. Die Abgase der Brennkraftmaschine 100 gelangen über eine Abgasleitung 110 in die Umgebung. In der Abgasleitung ist ein Abgasnachbehandlungssystem 115 angeordnet. Hierbei kann es sich um einen Katalysator und/oder um einen Partikelfilter handeln. Desweiteren ist es möglich, dass mehrere Katalysatoren für unterschiedliche Schadstoffe oder Kombinationen von wenigstens einem Katalysator und einem Partikelfilter vorgesehen sind.

Desweiteren ist eine Steuereinheit 170 vorgesehen, die wenigstens eine Motorsteuereinheit 175 und eine Abgasnachbehandlungssteuereinheit 172 umfaßt. Die Motorsteuereinheit 175 beaufschlagt ein Kraftstoffzumesssystem 180 mit Ansteuersignalen. Die Abgasnachbehandlungssteuereinheit 172 beaufschlagt die Motorsteuereinheit 175 und bei einer Ausgestaltung ein Stellelement 182, das in der Abgasleitung vor dem Abgasnachbehandlungssystem oder im Abgasnachbehandlungssystem angeordnet ist, mit Ansteuersignalen.

Desweiteren sind verschiedene Sensoren vorgesehen, die die Abgasnachbehandlungssteuereinheit und die Motorsteuereinheit mit Signalen versorgen. So ist wenigsten ein erster Sensor 194 vorgesehen, der Signale liefert, die den Zustand der Luft charakterisiert, die der Brennkraftmaschine zugeführt wird. Ein zweiter Sensor 177 liefert Signale, die den Zustand des Kraftstoffzumesssystems 180 charakterisieren. Wenigsten ein dritter Sensor 191 liefert Signale, die den Zustand des Abgases vor dem Abgasnachbehandlungssystem charakterisieren. Wenigsten ein vierter Sensor 193 liefert Signale, die den Zustand des Abgasnachbehandlungssystems 115 charakterisieren. Desweiteren liefert wenigstens ein Sensor 192 Signale, die den Zustand der Abgase nach dem Abgasnachbehandlungssystem charakterisieren. Vorzugsweise werden Sensoren, die Temperaturwerte und/oder Druckwerte erfassen verwendet. Desweiteren können auch Sensoren eingesetzt werden, die die chemische Zusammensetzungen des Abgases und/oder der Frischluft charakterisieren. Hierbei handelt es sich bspw. um Lambdasensoren, NOX-Sensoren oder HC-Sensoren.

Mit den Ausgangssignalen des ersten Sensors 194, des dritten Sensors 191, des vierten Sensors 193 und des fünften Sensors 192 wird vorzugsweise die Abgasnachbehandlungssteuereinheit 172 beaufschlagt. Mit den Ausgangssignalen des zweiten Sensors 177 wird vorzugsweise die Motorsteuereinheit 175 beaufschlagt. Es können auch weitere nicht dargestellte Sensoren vorgesehen sein, die ein Signal bezüglich des Fahrerwunsches oder weitere Umgeburigs- oder Motorbetriebszustände charakterisieren.

Besonders vorteilhaft ist es, wenn die Motorsteuereinheit und die Abgasnachbehandlungssteuereinheit eine bauliche Einheit bilden. Es kann aber auch vorgesehen sein, dass diese als zwei Steuereinheiten ausgebildet sind, die räumlich voneinander getrennt sind.

Im folgenden wird die erfindungsgemäße Vorgehensweise am Beispiel eines Partikelfilters, der insbesondere bei direkteinspritzenden Brennkraftmaschinen verwendet wird, beschrieben. Die erfindungsgemäße Vorgehensweise ist aber nicht auf diese Anwendung beschränkt, sie kann auch bei anderen Brennkraftmaschinen mit einem Abgasnachbehandlungssystem eingesetzt werden. Insbesondere kann sie eingesetzt werden, bei Abgasnachbehandlungssystemen, bei denen ein Katalysator und ein Partikelfilter kombiniert sind. Desweiteren ist sie einsetzbar, bei Systemen die lediglich mit einem Katalysator ausgestattet sind.

Ausgehend von den vorliegenden Sensorsignalen berechnet die Motorsteuerung 175 Ansteuersignale zur Beaufschlagung des Kraftstoffzumesssystems 180. Dieses mißt dann die entsprechende Kraftstoffmenge der Brennkraftmaschine 100 zu. Bei der Verbrennung können im Abgas Partikel entstehen. Diese werden von dem Partikelfilter im Abgasnachbehandlungssystem 115 aufgenommen. Im Laufe des Betriebs sammeln sich in dem Partikelfilter 115 entsprechende Mengen von Partikeln an. Dies führt zu einer Beeinträchtigung der Funktionsweise des Partikelfilters und/oder der Brennkraftmaschine. Deshalb ist vorgesehen, dass in bestimmten Abständen bzw. wenn der Partikelfilter einen bestimmten Beladungszustand erreicht hat, ein Regenerationsvorgang eingeleitet wird. Diese Regeneration kann auch als Sonderbetrieb bezeichnet werden.

Der Beladungszustand wird bspw. anhand verschiedener Sensorsignale erkannt. So kann zum einen der Differenzdruck zwischen dem Eingang und dem Ausgang des Partikelfilters 115 ausgewertet werden. Zum anderen ist es möglich den Beladungszustand ausgehend von verschiedenen Temperatur- und/oder verschiedenen Druckwerten zu ermitteln. Desweiteren können noch weitere Größen zur Berechnung oder Simulation des Beladungszustands herangezogen werden. Eine entsprechende Vorgehensweise ist bspw. aus der DE 199 06 287 bekannt.

Erkennt die Abgasnachbehandlungssteuereinheit, dass der Partikelfilter einen bestimmten Beladungszustand erreicht hat, so wird die Regeneration initialisiert. Zur Regeneration des Partikelfilters stehen verschiedene Möglichkeiten zur Verfügung. So kann zum einen vorgesehen sein, dass bestimmte Stoffe über das Stellelement 182 dem Abgas zugeführt werden, die dann eine entsprechende Reaktion im Abgasnachbehandlungssystem 115 hervorrufen. Diese zusätzlich zugemessenen Stoffe bewirken unter anderem eine Temperaturerhöhung und/oder eine Oxidation der Partikel im Partikelfilter. So kann bspw. vorgesehen sein, dass mittels des Stellelements 182 Kraftstoffstoff und/oder Oxidationsmittel zugeführt werden.

Bei einer Ausgestaltung kann vorgesehen sein, dass ein entsprechendes Signal an die Motorsteuereinheit 175 übermittelt wird und diese eine so genannte Nacheinspritzung durchführt. Mittels der Nacheinspritzung ist es möglich, gezielt Kohleriwasserstoffe in das Abgas einzubringen, die über eine Temperaturerhöhung zur Regeneration des Abgasnachbehandlungssystems 115 beitragen.

Üblicherweise ist vorgesehen, dass der Beladungszustand ausgehend von verschiedenen Größen bestimmt wird. Durch Vergleich mit einem Schwellwert werden die unterschiedlichen Zustände erkannt und abhängig vom erkannten Beladungszustand die Regeneration eingeleitet.

Bei einer besonders vorteilhaften Ausgestaltung des Systems zur Abgasnachbehandlung sind Sensoren zur Erfassung des Differenzdruckes zwischen dem Ein- und Ausgang des Partikelfilters sowie Sensoren zur Erfassung der Sauerstoffkonzentration vor und nach dem Partikelfilter vorgesehen. Desweiteren ist bei einer vorteilhaften Ausgestaltung ein Temperatursensor zur Messung der Abgastemperatur vor, in oder nach dem Partikelfilter vorgesehen.

Im normalen Fahrbetrieb werden die Lambdasonden bzw. eine der Lambdasonden für die Überwachung und/oder Steuerung der Verbrennung im Motor verwendet. Wird eine entsprechende Beladung des Partikelfilters erkannt, wird ein Sonderbetrieb durchgeführt, d. h. der Partikelfilter wird regeneriert. Während der Regeneration wird die Sauerstoffkonzentration vor und nach dem Filter verglichen. Übersteigt die Abgastemperatur, die vorzugsweise mit einem Sensor erfasst wird, einen bestimmten Wert, so werden die Partikel oxidiert, was zu einer deutlichen Abnahme der Sauerstoffkonzentration hinter dem Filter führt. Nimmt die Sauerstoffkonzentration hinter dem Filter wieder zu, so ist dies ein Zeichen dafür, dass die Regeneration beendet ist. Bei ausreichend großer Abgastemperatur während der Regeneration wird die vollständige Regeneration des Partikelfilters erkannt, wenn die Sauerstoffkonzentration vor und nach dem Partikelfilter nahezu gleich ist.

Die erfindungsgemäße Vorgehensweise ist dabei nicht nur auf den Partikelfiler beschränkt, sie kann auch bei anderen Abgasnachbehandlungssystemen wie beispielsweise einem Oxidationskatalysator und/oder einem kontinuierlich arbeitenden Partikelfiltersystem verwendet werden.

Im Folgenden wird die erfindungsgemäße Vorgehensweise anhand des Flussdiagrammes der Figur 2 beschrieben. Im normalen Betrieb der Brennkraftmaschine beinhalten die Abgase der Brennkraftmaschine bei bestimmten Betriebszuständen kleine Partikelmengen. Diese werden von dem Partikelfilter absorbiert und führen zu einer Erhöhung des Strömungswiderstandes durch den Partikelfilter. Der Strömungswiderstand verursacht wiederum eine Druckdifferenz zwischen dem Ein- und Ausgang des Partikelfilters. Die Druckdifferenz zwischen dem Eingang und dem Ausgang des Partikelfilters ist dabei ein Maß für die Beladung des Partikelfilters.

In einem ersten Schritt 200 wird diese Druckdifferenz DP zwischen dem Ein- und Ausgang des Partikelfilters erfasst. Sie dient als Zustandsgröße, die den Zustand des Abgasnachbehandlungssystems charakterisiert. Im sich anschließenden Schritt 210 wird ausgehend von dieser Zustandsgröße eine Eingangsgröße SIMP bestimmt, die die Menge, der dem Abgasnachbehandlungssystem zugeführten Stoffe charakterisiert. D. h. die Eingangsgröße SIMP entspricht der Partikelmenge, die im Partikelfilter abgelagert wird.

Die anschließende Abfrage 220 überprüft, ob die Druckdifferenz größer als ein Summenwert ist. Dabei entspricht der Summenwert der Summe aus einem Schwellenwert SW und einem Offsetwert P0. Der Wert P0 entspricht der Druckdifferenz eines völlig regenerierten Partikelfilters.

Erkennt die Abfrage 220, dass die Druckdifferenz DP größer als die Summe aus dem Schwellenwert und dem Offsetwert ist, so wird in Schritt 230 die Regeneration eingeleitet. Ist dies nicht der Fall, so folgt weiterhin der Normalbetrieb im Schritt 200.

Anstelle der Druckdifferenz DP können auch andere Größen verwendet werden, die den Zustand des Abgasnachbehandlungssystems charakterisieren. Insbesondere ist es möglich, ausgehend von anderen Betriebskenngrößen, wie beispielsweise der einzuspritzenden Kraftstoffmenge der Drehzahl und weiteren Größen, den Beladungszustand zu simulieren.

Während der Regeneration in Schritt 230 werden geeignete Maßnahmen durchgeführt, die dazu führen, dass die Abgastemperatur ansteigt. Dabei kann beispielsweise vorgesehen sein, dass eine Nacheinspritzung erfolgt, oder dass der Beginn, die Dauer oder das Ende der Einspritzung so verändert wird, bzw. das Einspritzprofil so verändert wird, dass die Abgastemperatur ansteigt. Gleichzeitig werden in Schritt 230 die Signale der Sensoren ausgewertet, die eine erste Sauerstoffkonzentration 01 vor dem Partikelfilter und eine zweite Sauerstoffkonzentration 02 nach dem Partikelfilter erfassen. Desweiteren wird die Abgastemperatur insbesondere vor dem Partikelfilter erfasst, alternativ kann auch die Abgastemperatur T im oder nach dem Partikelfilter erfasst werden.

Die anschließende Abfrage 240 überprüft, ob die Sauerstoffkonzentration vor dem Partikelfilter größer ist als die Sauerstoffkonzentration nach dem Partikelfilter. Ist dies der Fall, so ist die Regeneration noch nicht abgeschlossen, und es folgt erneut Schritt 230. Ist dies nicht der Fall, das heißt die Sauerstoffkonzentration vor und nach dem Partikelfilter ist nahezu gleich, so folgt eine Abfrage 245, die überprüft, ob die Abgastemperatur T größer als ein Schwellenwert TSW ist. Ist dies der Fall, das heißt die Abgastemperatur ist so groß, dass eine Regeneration möglich ist und die Sauerstoffkonzentration vor und nach dem Partikelfilter ist nahezu gleich, so ist die Regeneration abgeschlossen und es folgt Schritt 250. Ist die Abgastemperatur T kleiner als der Schwellenwert TSW, so wird abhängig von der Ausgestaltung der Vorgehensweise mit Schritt 230 oder mit Schritt 200 fortgesetzt. Die beiden Alternativen sind mit gestrichelten Linien gekennzeichnet.

Im Schritt 250 wird ausgehend von der ersten Sauerstoffkonzentration 01 vor dem Partikelfilter und der zweiten Sauerstoffkonzentration 02 nach dem Partikelfilter, die während der Regeneration vorlag, die Menge der Partikel bestimmt, die während des Regenerationsvorganges oxidiert wurden. Diese Ausgangsgröße SIMR charakterisiert die Menge der dem Abgasnachbehandlungssystems während der Regeneration entnommenen Stoffe. Vorzugsweise wird aus der Differenz zwischen der ersten und zweiten Sauerstoffkonzentration die verbrauchte Sauerstoffmenge ermittelt. Aus dieser wird die verbrannte Partikelmenge bestimmt und über den gesamten Regenerationsvorgang aufintegriert.

Die anschließende Abfrage 260 überprüft, ob die Eingangsgröße SIMP und die Ausgangsgröße SIMR nahezu gleich sind. Ist dies nicht der Fall, d. h. es werden mehr Partikel in dem Partikelfilter eingelagert als regeneriert oder es werden weniger Partikel eingelagert als regeneriert, so ist von einem Defekt auszugehen. In diesem Fall wird in Schritt 270 auf Fehler erkannt. Sind die beiden Mengen nahezu gleich, so wird in Schritt 280 der Offsetwert P0 neu definiert, d. h. der neue Offsetwert entspricht der Druckdifferenz nach der vollständigen Regeneration.

Bei der in Figur 2 dargestellten Ausführungsform handelt es sich um eine besonders vorteilhafte Ausgestaltung, bei der Einzelelemente weggelassen oder durch zusätzliche Abfragen und Schritte ergänzt werden können. Besonders vorteilhaft ist eine Ausgestaltung, bei der lediglich die Schritte 200 bis 240 durchgeführt werden, d. h. dass lediglich das Ende der Regeneration ausgehend von den Signalen bezüglich der Sauerstoffkonzentration erkannt wird.

Desweiteren ist es besonders vorteilhaft, wenn das Ende der Regeneration mittels anderer Größen erkannt und die Sauerstoffkonzentration nur zur Überwachung des Abgasnachbehandlungssystems verwendet wird.

Die Abfrage 220 bewirkt, dass der Sonderbetrieb, d. h. die Regeneration eingeleitet wird, wenn eine Zustandsgröße, die den Beladungszustand als Abgasnachbehandlungssystem charakterisiert, einen Schwellwert überschreitet. Dadurch, dass der Offsetwert P0 des Schwellwerts am Ende der Regeneration, wenn diese vollständig durchgeführt wurde, neu festgelegt wird, kann der Schwellenwert adaptiert werden. Alternativ kann auch vorgesehen sein, dass ein Korrekturfaktor zur Korrektur der Zustandsgröße DP gebildet wird.

Der Strömungswiderstand bzw. der Differenzdruck, den der Partikelfilter nach der Regeneration aufweist, dient als Ausgangswert, der einen leeren Filter kennzeichnet. Mittels dieses Ausgangswerts wird nach jeder vollständigen Regeneration der Schwellenwert, bei dem die Regeneration ausgelöst wird und/oder die Größe, die den Beladungszustand charakterisiert neu kalibriert. Unterschiedliche Ascheeinlagerungen können damit adaptiert werden.

Besonders vorteilhaft ist es, dass während des Sonderbetriebs, d. h. während der Regeneration ausgehend von der ersten Größe und der zweiten Größe, die die Sauerstoffkonzentration vor und nach dem Partikelfilter charakterisieren, eine Ausgangsgröße bestimmt wird, die die Menge der dem Abgasnachbehandlungssystem entnommenen Stoffe, d. h. die regenerierte Partikelmenge, charakterisiert.

Besonders vorteilhaft ist es auch, dass die Eingangsgröße SIMP, die die Menge der dem Abgasnachbehandlungssystem zugeführte Stoffe charakterisiert, in Schritt 210 erfasst und in Schritt 260 mit der Ausgangsgröße SIMR verglichen und ausgehend von diesem Vergleich auf Fehler erkannt wird.

## Patentansprüche

1. Verfahren zur Steuerung eines Partikelfilters (115), bei dem zeitweise eine Regeneration durchgeführt wird, **dadurch gekennzeichnet, dass** die Steuerung und/oder die Überwachung der Regeneration abhängig von einer ersten Größe (O1), welche die Sauerstoffkonzentration im Abgas vor dem Partikelfilter (115) charakterisiert, und einer zweiten Größe (02), welche die Sauerstoffkonzentration im Abgas nach dem Partikelfilter (115) charakterisiert, erfolgt.

2. Verfahren nach Anspruch 1, **dadurch gekennzeichnet, dass** die Regeneration beendet wird, wenn die erste Größe (O1) nahezu gleich der zweiten Größe (02) ist.

3. Verfahren nach Anspruch 1 oder 2, **dadurch gekennzeichnet, dass** die Regeneration eingeleitet wird, wenn eine Zustandsgröße (DP), die den Beladungszustand des Partikelfilters charakterisiert, einen Schwellenwert (SW+P0) überschreitet.

4. Verfahren nach einem der vorhergehenden Ansprüche, **dadurch gekennzeichnet, dass** die Zustandsgröße (DP) und/oder der Schwellenwert (SW+P0) adaptiert wird.

5. Verfahren nach einem der vorhergehenden Ansprüche, **dadurch gekennzeichnet, dass** während der Regeneration, ausgehend von der ersten Größe (O1) und der zweiten Größe (02), eine Ausgangsgröße (SIMR) bestimmt wird, welche die Menge der dem Partikelfilter (115) entnommenen Stoffen charakterisiert.

6. Verfahren nach einem der vorhergehenden Ansprüche, **dadurch gekennzeichnet, dass** die Ausgangsgröße mit einer Eingangsgröße (SIMP), welche die Menge der dem Partikelfilter (115) zugeführten Stoffe charakterisiert, verglichen und ausgehend von dem Vergleich auf Fehler erkannt wird.

7. Vorrichtung zur Steuerung eines Partikelfilters (115), wobei zeitweise eine Regeneration durchgeführt wird, **dadurch gekennzeichnet, dass** Mittel (182, 192, 172) vorgesehen sind, welche die Regeneration abhängig von einer ersten Größe (O1), welche die Sauerstoffkonzentration im Abgas vor dem Partikelfilter (115) charakterisiert, und einer zweiten Größe (02), welche die Sauerstoffkonzentration im Abgas nach dem Partikelfilter (115) charakterisiert, steuern und/oder überwachen.

## Claims

1. Method for controlling a particulate filter (115), in which a regeneration is carried out from time to time, **characterized in that** the control and/or monitoring of the regeneration takes place as a function of a first variable (01), which characterizes the oxygen concentration in the exhaust gas upstream of the particulate filter (115), and a second variable (02), which characterizes the oxygen concentration in the exhaust gas downstream of the particulate filter (115) .

2. Method according to Claim 1, **characterized in that** the regeneration is terminated when the first variable (01) is virtually equal to the second variable (02).

3. Method according to Claim 1 or 2, **characterized in that** the regeneration is initiated when a state variable (DP), which characterizes the loading state of the particulate filter, exceeds a threshold value (SW+P0).

4. Method according to one of the preceding claims, **characterized in that** the state variable (DP) and/or the threshold value (SW+P0) is adapted.

5. Method according to one of the preceding claims, **characterized in that** during the regeneration an output variable (SIMR), which characterizes the quantity of substances removed from the particulate filter (115), is determined on the basis of the first variable (01) and the second variable (02).

6. Method according to one of the preceding claims, **characterized in that** the output variable is compared with an input variable (SIMP), which characterizes the quantity of substances fed to the particulate filter (115), and faults are detected on the basis of the comparison.

7. Device for controlling a particulate filter (115), with a regeneration being carried out from time to time, **characterized in that** there are means (182, 192, 172) which control and/or monitor the regeneration as a function of a first variable (01), which characterizes the oxygen concentration in the exhaust gas upstream of the particulate filter (115), and a second variable (02), which characterizes the oxygen concentration in the exhaust gas downstream of the particulate filter (115) .

## Revendications

1. Procédé de commande d'un filtre à particules (115), effectuant une régénération périodique,
**caractérisé en ce que**
la commande et/ ou la surveillance de la régénération se fait en fonction d'une première grandeur (01) qui caractérise la concentration d'oxygène dans les gaz d'échappement avant le filtre à particules (115), et d'une seconde grandeur (02) qui caractérise la concentration d'oxygène dans les gaz d'échappement après le filtre à particules (115).

2. Procédé selon la revendication 1,
**caractérisé en ce qu'**
on termine la régénération, quand la première grandeur (01) est presque identique à la seconde grandeur (02).

3. Procédé selon la revendication 1 ou 2,
**caractérisé en ce qu'**
on commence la régénération quand un paramètre d'état (DP) qui caractérise l'état de chargement du filtre à particules, dépasse une valeur de seuil (SW+P0).

4. Procédé selon l'une quelconque des revendications précédentes,
**caractérisé en ce que**
le paramètre d'état (DP) et/ou la valeur de seuil (SW+P0) est adapté(e).

5. Procédé selon l'une quelconque des revendications précédentes,
**caractérisé en ce que**
pendant la régénération on détermine sur la base de la première grandeur (O1) et de la seconde grandeur (02) qui caractérise la quantité de matières retirées du filtre à particules (115).

6. Procédé selon l'une quelconque des revendications précédentes,
**caractérisé en ce qu'**
on compare la grandeur de sortie à une grandeur d'entrée (SIMP) qui caractérise la quantité de matières amenées au filtre à particules (115), et on conclut à un défaut d'après la comparaison.

7. Dispositif de commande d'un filtre à particules (115) dans lequel une régénération est effectuée par moment,
**caractérisé par**
des moyens (182, 192, 172) qui commandent et/ou surveillent la régénération en fonction d'une première grandeur (O1) caractérisant la concentration d'oxygène dans le gaz d'échappement avant le filtre à particules (115), et d'une seconde grandeur (02) caractérisant la concentration d'oxygène dans le gaz d'échappement après le filtre à particules (115).
